# EUROPEAN PATENT SPECIFICATION

(11) **EP 0 695 566 B1**
(45) Date of publication and mention of the grant of the patent: **31.05.2000**
(21) Application number: 95305368.3
(22) Date of filing: 01.08.1995
(51) Int. Cl.: A63F 13/00, G06K 11/18

(54) **Manipulator for game machine**
Handbedienteil für ein Spielgerät
Manipulateur pour une machine de jeu

(30) Priority: 02.08.1994 JP 20146594
(43) Date of publication of application: 07.02.1996
(60) Divisional application: 99202909.0
(73) Proprietor: NINTENDO CO. LIMITED, Higashiyama-ku Kyoto (JP)
(72) Inventor: Yokoi, Gunpei, c/o Nintendo Co. Ltd., Kyoto (JP); Sugino, Kenichi, c/o Nintendo Co. Ltd., Kyoto (JP)
(74) Representative: Jones, David Colin

(56) References cited:
- EP-A- 0 470 615
- WO-A-92/09347
- WO-A-94/12999
- GB-A- 2 244 546
- US-A- 4 976 429

## Description

### BACKGROUND OF THE INVENTION

### Field of the invention

The present invention relates to a manipulator for game machine, and more particularly to a manipulator for game machine which is used in a television game machine, a video game machine with display, or the like to which a cartridge storing a game program is detachably attached and which executes the process for the game by reading out the game program from the cartridge.

### Description of the prior arts

Manipulators for game machine (game controllers) to be used in television game or the like known hitherto include the joy stick type as disclosed in the Japanese Laid-open patent No. 58-225,515 (corresponding to USP No. 4,414,438; hereinafter called prior art 1), and the joy pad type as disclosed in the Japanese Laid-open Utility Model No. 4-42,0̸29 (corresponding to USP No. 5,20̸7,426; hereinafter called prior art 2). In prior art 1, the main body housing is held by a non-dexterous hand, and a control rod (handle) is held by the dexterous hand, and by tilting the wrist in this state, the moving direction of the character is instructed. In prior art 2, on a flat housing that can be held by both hands, a plurality of operation switches for direction instruction and action instruction are arranged.

In prior art 1, in order to manipulate the control rod by tilting the wrist,the main body must be always held stably. However, for use in the game, it is necessary to manipulate action instructing switches for instructing various actions, and usually these switches are provided at the main body side, and are hence manipulated by the hand holding the main body. It is therefore difficult to hold the main body stably while manipulating the action instructing switches, and it was hard to manipulate. If the action instructing switches are provided in the control rod, since the direction is instructed by tilting the wrist, the hand is fatigued after a long use, and the controllability was poor.

In prior art 2, it is designed to be held by both hands, and the operation switches can be manipulating without changing the palm holding state, and the problems in prior art 1 were solved and stable manipulation was possible. However, since the shape is flat, it has few positions to be caught by hand or finger, and it often slips out of hands during operation, or the holding position may be deviated to cause deviation in the configuration of the switches and fingers, and misoperations are likely to occur, and it was necessary to hold the manipulator correctly on every occasion of misoperation by viewing, and correct the configuration of switches and fingers. As a result, a continuously running game was interrupted, and pleasant feel of manipulation was not obtained. In particular, when used in the game machine with a goggle type display unit, to correct the position deviation from fingers by viewing the manipulator, the game machine with display unit must be dismounted from the head, which was very bothersome.

In a controller disclosed in the Japanese Laid-open Utility Model No. 4-10̸4,893 (hereinafter called prior art 3), since a grip is formed in the manipulator of prior art 2, it does not slip off during operation or the holding position will not be deviated. In prior art 3, however, since the manipulation plane on which operation switches are formed projects ahead (to the player side)of the grip, the player must use by warping the thumb (in other words, by keeping the thumb root always in tense state), the thumb is fatigued and cannot withstand a long use. Besides, since the root of the thumb is always in tense state, the moving range of the thumb is limited, and the feel of manipulation is not pleasant.

### SUMMARY OF THE INVENTION

Therefore, a principal object of the present invention is to provide a novel manipulator for a game machine.

Another object of the present invention is to provide a manipulator having a good operability.

According to the present invention there is provided a game controller which is adapted to be used with a video game machine and comprises a first operating portion provided in a first operating region; a second operating portion provided in a second operating region; a first handle formed in a manner projecting in use from a lower portion of said first operating region toward the front of a player; and a second handle formed in a manner projecting in use from a lower portion of said second operating region toward the front of the player, wherein said first handle and said second handle are grippable by left and right hand palms of the player, said first operating portion and said second operating portion are arranged for operation by left and right hand thumbs, and at least one of said first and second operating portions is arranged for designating a direction in movement of an object of a game by player's operation characterized in that the controller further comprises a housing on which said first operating region and said second operating region are integrally provided laterally adjacent to each other in the same plane and that said first operating region and said second operating region are formed to be lowered in relation to portions at which the thumb roots are positioned on said first handle and said second handle.

The player holds the first grip by one hand, and holds the second grip by the other hand. In the grip holding state, the thumb of the player draws a spontaneous arc along the step formed between the grip and the operating region, and is positioned on the first and second operation regions.

According to embodiments of the present invention, the player holds in the grip catching state, and hence can hold more securely as compared with a manipulator in a flat shape held by both palms. It is further structured to be caught easily by hand and fingers, and dropping of the manipulator during use or deviation of holding position are avoided, thereby allowing to continue to manipulate stably without having to look at the hands or change the holding position correctly, and misoperation due to deviation of configuration of switches and fingers can be prevented.

Moreover according to embodiments of the present invention, between the grip and operating region, a step is formed so as to be lower than the thumb root position of the player in the grip, so that the thumb draws a spontaneous arc along the step. As a result, any excessive load is not applied to the thumb, and the fatigue is less if used for a long time.

Furthermore, according to a fourth aspect of the invention, the front, rear, left and right directions, and upper, lower, right slant and left slant directions can be instructed, so that directions can be instructed in a three-dimensional space.

The above described objects and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front perspective view of a manipulator for game machine in an embodiment of the invention;
Fig. 2 is a rear perspective view of the embodiment in Fig. 1;
Fig. 3 is a concept diagram showing four moving directions, front, rear, left and right;
Fig. 4 is a concept diagram showing four moving directions, up, down, right slant and left slant;
Fig. 5 is a perspective view showing an operation state as seen from the front side in Fig. 1;
Fig. 6 is a perspective view showing an operation state as seen from the rear side in Fig. 1;
Fig. 7 is a diagram showing an operation state as seen from side in Fig. 1;
Fig. 8 is a front perspective view of a manipulator for game machine in other embodiment of the invention;
Fig. 9 is a rear perspective view of the embodiment in Fig. 8; and
Fig. 10̸ is a side view of the embodiment in Fig. 8.

### DETAILED DESCRIPTION OF THE PREFERRED EMBODIMENTS

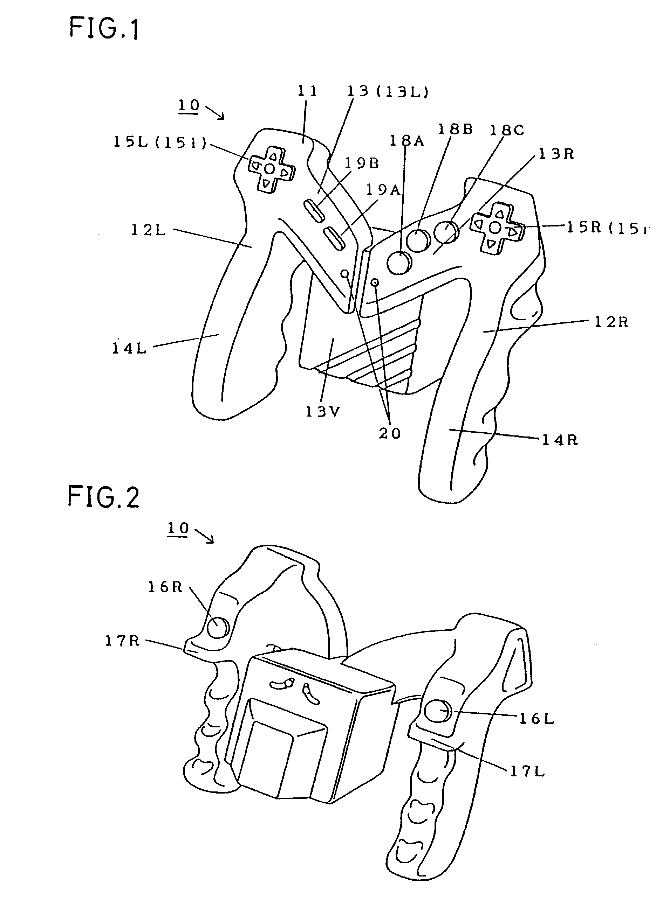

Fig.1 and Fig. 2 are perspective views showing a manipulator for game machine in an embodiment of the invention, and specifically Fig. 1 is a perspective view from the front side, and Fig. 2 is a perspective view from the rear side.

In the diagrams, a manipulator for game machine (hereinafter called controller) 10̸ contains a housing 11. The housing 11 is roughly composed of a right handle 12R, a left handle 12L, and a coupling 13 for coupling them. Inside the housing 11 is accommodated a board in a proper shape (not shown) in which desired conductive circuit patterns are formed by printed wiring or the like.

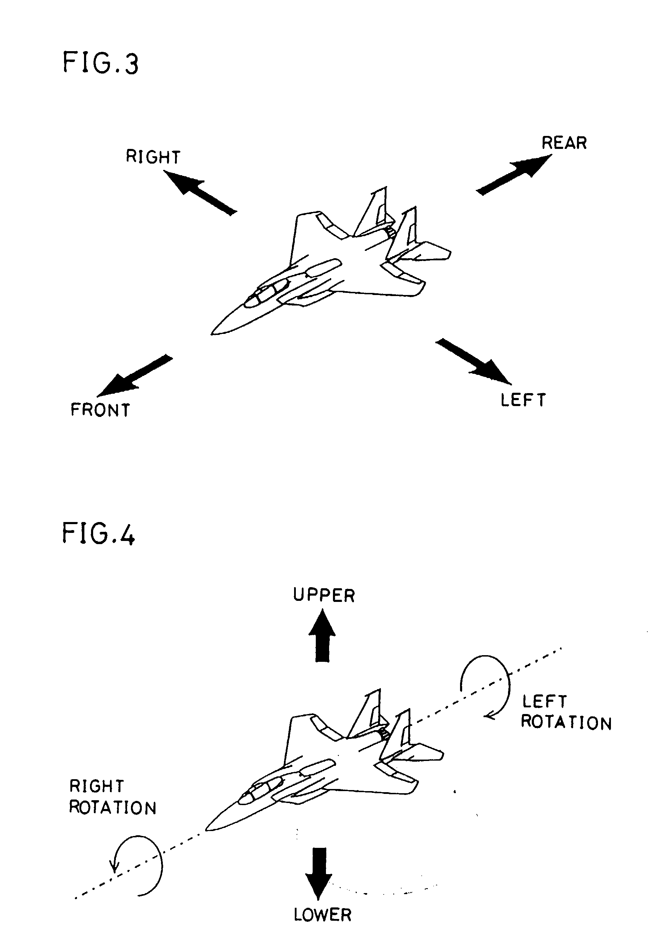

The right handle 12R and left handle 12L respectively comprise grips 14R, 14L to be held by the middle, ring and little fingers of the player, and a direction instructing switch for right hand 15R and a direction instructing switch for left hand 15L for instructing the moving direction of characters (hero and others) of the game, being disposed in the thumb position area of the player in the upper portions of the grips 14R, 14L. The direction instructing switch for right hand 15R comprises, for example, a cross key top 15r capable of instructing four orthogonal directions, that is, front, rear, left and right directions shown in Fig. 3, and further comprises four pressing pads corresponding to the four directions. The direction instructing switch for left hand 15L comprises, for example, a cross key top 151 capable of instructing four directions, that is, upper, lower, right slant and left slant directions shown in Fig. 4, and further comprises four pressing pads corresponding to the four directions.

The grips 14R, 14L have concave and convex parts to be matched with the fingers of the player when held, and a pleasant feel of holding is realized. In the index finger position areas of the player in the upper portions of the rear side of the grips 14R, 14L (in other words, the rear sides of the locations of the direction instructing means for right hand 15R and direction instructing means for left hand 15L), action instructing switches 16R, 16L (see Fig. 2) are formed. These action instruction switches 16R, 16L differ with the game program, and are used for instructing actions of characters such as "run" and "jump" except for the moving direction. In the boundary areas of the action instructing switches 16R, 16L and grips 14R, 14L, protrusions 17R, 17L are formed, on which the index fingers can be placed when not manipulating the action instructing switches 16R, 16L, and they also function as the guides for defining the moving direction of the index fingers at the time of manipulation.

The coupling 13 further comprises a power source unit 13V, a right coupling 13R for coupling the power source unit 13V and right handle 12R, and a left coupling 13L for coupling the power source unit 13V and left handle 12L. A dry cell or a battery is placed in the power source unit 13V, and when a dry cell is used, a battery lid is formed at proper position. When a rechargeable battery is used, an external input terminal for connecting with a commercial AC power source detachably or firmly with a cord or the like is exposed at a position not disturbing the manipulation of the player (for example, in the bottom of the power source unit 13V), and is covered with a lid or the like if necessary. It may be also constituted so that both dry cell and battery can be used.

The AC adapter for converting the commercial AC power source into DC may be either provided externally by using a cord, or incorporated in the power source unit 13V. When it is constituted to supply current through a cord by externally attaching an AC adapter, the overall weight of the controller 10̸ can be reduced, and hence the fatigue of the arms in long use can be alleviated. Or, when using by putting on a table or the like or the weight may be ignored, the overall weight of the controller 10̸ may be increased by incorporating the AC adapter, and hence the center of gravity is stabilized to prevent shaking during manipulation, so that a stable feel of manipulation may be realized.

In the right coupling 13R, switches 18A, 18B, 18C are formed so as to instruct three actions, different from those of the action instructing switches 16R, 16L, such as "punch," "kick" and "throw." In the left coupling 13L, a start switch 19A for instructing to start the game, and a select switch 19B for selecting the games are formed.

In this embodiment, in order that the switches 18A, 18B, 18C, 19A, and 19B may be arranged within the accessible range of the thumbs, the coupling 13 is coupled near the upper end of the handle 12 in which the direction instructing switch 15 is formed, but as far as the switches 18A, 18B, 18C, 19A, and 19B may be arranged within the accessible range of the thumbs, it is not always necessary to coupling the coupling 13 near the upper end of the handle 12. Otherwise, when the operating region for forming the direction instructing switch 15 is wide and the switches 18A, 18B, 18C, 19A, and 19B are arranged in this area, the coupling position of the coupling 13 with the handle 12 is not particularly limited.

The direction instructing switch for right hand 15R and direction instructing switch for left hand 15L comprise cross key tops 15r, 15l as mentioned above. The direction instructing switches including these key tops 15r, 15l are disclosed, for example, in the Japanese Utility Model Publication No. 3-13,951 (USP No. 4,687,20̸0̸). That is, in the lower parts of the key tops 15r, 15l, rubber contacts (not shown) forming four contacts are respectively arranged, and each rubber contact is composed on a board (not shown) in which contact circuits are formed. By pressing any one of a total of eight pressing pads of the key tops 15r and 15l, the four contacts each or eight contacts in all and the contact circuits are electrically connected, and a signal instructing any one or combined direction of eight directions of front, rear, left, right, upper, lower, right slant and left slant directions is picked up, thereby acting as a switch for instructing a three-dimensional direction. The key tops 15r, 15l are put in the housing 11 with the pressing pads exposed, and the board is placed near the bottom of the key tops 15r, 15l in the housing 11.

Incidentally, if the character manipulated by the controller 10̸ of the invention is an airplane as shown in Figs. 3 and 4, its three-dimensional move instructing direction consists of eight directions as mentioned above, but depending on the character in question, the three-dimensional move instructing direction is composed of different combinations, and the combinations are controlled by the game program. As the three-dimensional move instructing directions aside from those mentioned above may include, for example in a human character, eight directions, front, rear, left, right, jump, squat, face right, and face left.

The switches 16R, 16L, 18A, 18B, 18C, 19A, 19B are respectively composed of key tops 16r, 16l, 18a, 18b, 18c, 19a, 19b stored with their pressing pads exposed from the housing 11, rubber contacts (not shown) disposed in the lower part of each key top, and a board (not shown) on which rubber contacts are placed and contact circuits are formed.

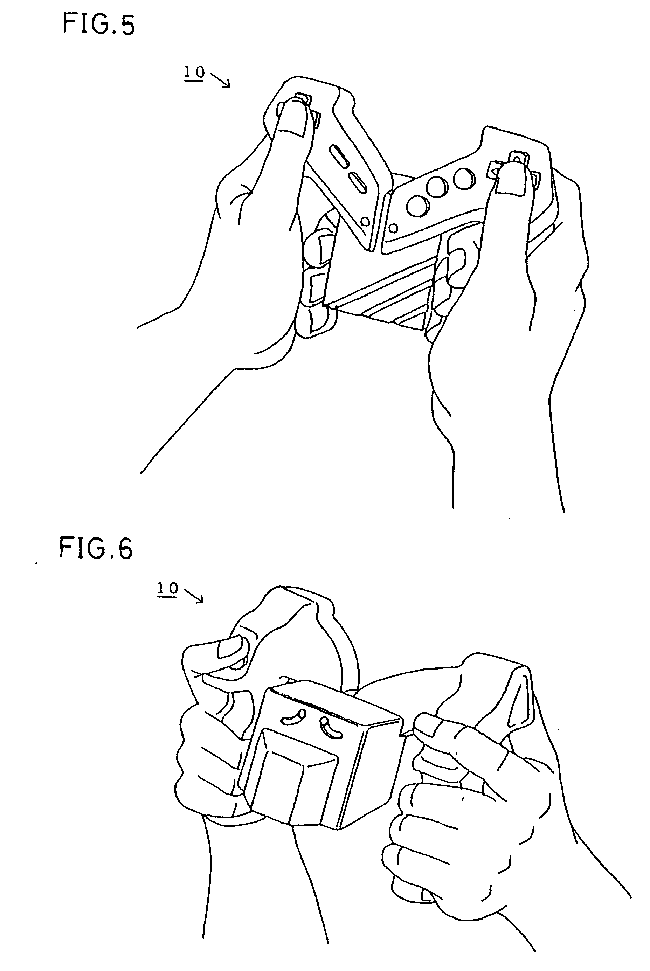

Fig. 5 and Fig. 6 are diagrams showing the operation state of the controller 10̸ of the invention. The player holds the right grip 14R and left grip 14L by the right hand and left hand, respectively. At this time, the middle, ring and little fingers of the player are curved along the per-formed convex and concave parts, so that the player can hold the controller 10̸ firmly. The index fingers are positioned above the protrusions 17R, 17L formed in the upper parts of the grips 14R, 14L, and are used for manipulating the action instructing switches 16R, 16L. Usually, the index fingers rest on the protrusions 17R, 17L, and when manipulating the action instructing switches 16R, 16L, they are moved along the protrusions 17R, 17L. The thumbs are located on the key tops 15r, 15l while gripping the grips 14R, 14L, and presses down the pressing parts by tilting in the desired input direction. As a result, the corresponding contact is connected, and a desired direction instructing signal (pulse signal) is picked up. Besides, by slightly shifting the right thumb to the inside, the action instructing switches 18A, 18B, 18C can be pressed.

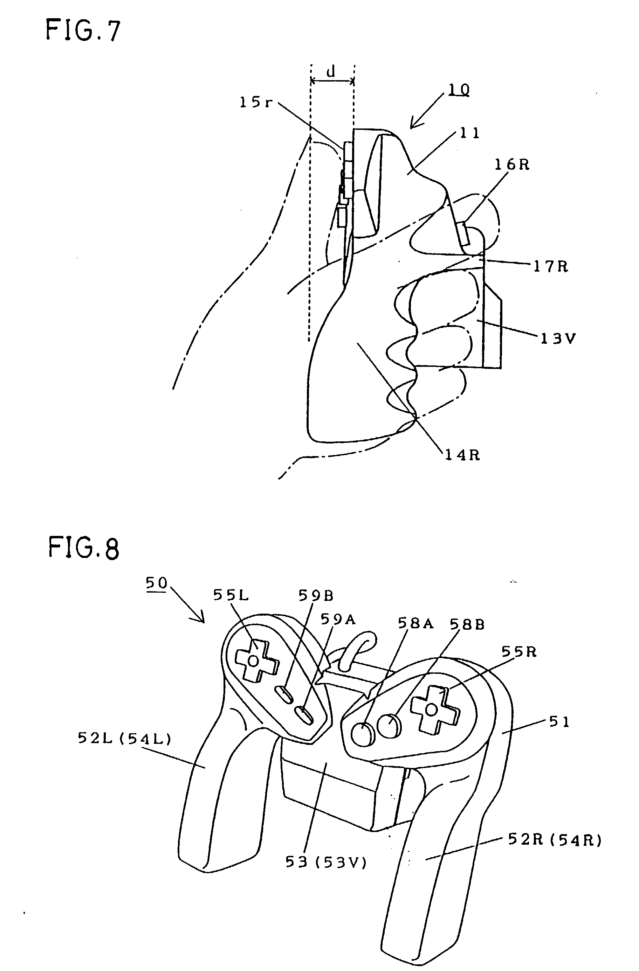

Meanwhile, as shown in Fig. 7, in the controller 10̸ of the invention, since a step d is provided between the grip 14 and the operating region forming the direction instructing switch 15, when the player holds the controller 10̸, the thumb draws a spontaneous arc along the step d. Accordingly, the thumb is free to move, without being warped, loaded with an excessive force, or kept always in tense state, so that fatigue is less if used for a long time.

More preferably, the interval or opening of the grips 14R, 14L may be freely adjustable depending on the individual difference of the player, by providing a shaft 20̸ penetrating from the surface of the right coupling 13R and left coupling 13L to the back of the power source unit 13V. Or, relating to the right coupling 13R and left coupling 13L, a gear may be provided to engage with each other, and the right and left sides may be opened or closed simultaneously, or the opening angle may be adjustable in multiple steps.

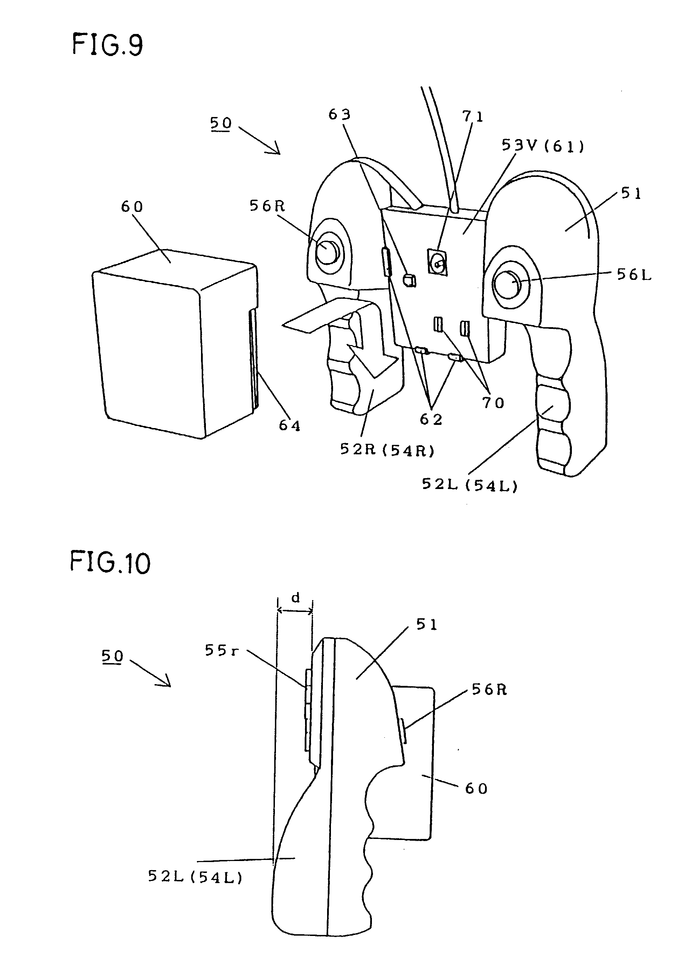

Fig. 8 and Fig. 9 are diagrams showing a manipulator for game machine in other embodiment of the invention, and specifically Fig. 8 is a perspective view seen from the surface, and Fig. 9 is a perspective view seen from the back side.

A controller 50̸ in the embodiment in Fig. 8 comprises a housing 51, same as the controller 10̸ in the embodiment in Fig. 1. The housing 51 is roughly composed of a right handle 52R, a left handle 52L, and a coupling 53 for coupling them. Inside the housing 51 is accommodated a board in a proper shape (not shown) in which desired conductive circuit patterns are formed by printed wiring or the like.

The right handle 52R and left handle 52L respectively comprise grips 54R, 54L, direction instructing switch for right hand 55R, and direction instructing switch for left hand 55L, and the direction instructing switches 55R and 55L further comprise cross key tops 55r, 55l.

The grips 54R, 54L have convex and concave parts to match with the fingers of the player, and action instructing switches 56R, 56L are formed in the index finger position areas of the player in the upper parts of the back side of the grips 54R, 54L. In the embodiment in Fig. 1, the index fingers are positioned by forming protrusions 17R, 17L in the boundary parts of the grips 14R, 14L and action instructing switches 16R, 16L, but in the embodiment in Fig. 8, the forming regions of the action instructing switches 56R, 56L are inclined by a certain angle to the grips 54R, 54L and direction instructing switches 55R, 55L, thereby defining the index fingers so as not to deviate in the direction toward the grips 54R, 54L, and the index fingers are further positioned by forming a recess around the action instructing switches 56R, 56L.

The coupling 53 comprises a power source unit 53V, a right coupling 53R, and a left coupling 53L. In the embodiment in Fig. 8, by widening the operating regions for forming the direction instructing switches 55R, 55L, they serve also as the right coupling 53R and left coupling 53L. The power source unit 53V comprises a power source case 60̸ detachable from the housing 51, and a base 61 of the housing 51 side for detaching or attaching the power source case 60̸. In the power source case 60̸, a dry cell or a rechargeable battery is placed. In the base 61, an engaging pawl 62 and an engaging bump 63 are formed for engaging and holding the power source case 60̸. By contrast, at the power source case 60̸ side, an engaging groove 64 corresponding to the engaging pawl 62, and an engaging recess (not shown) to be engaged with the engaging bump 63 are formed.

A terminal 70̸ for electrically connecting with the power source case 60̸ is formed in the base 61, and also a terminal 71 for connecting the power cord when not attaching and using the power source case 60̸ is formed, so that the player may attach and use the power source case 60̸, or use the power cord by detaching it, as desired. When the power source case 60̸ is attached, the terminal 71 for power source cord is covered with the power source case 60̸ so as not to be exposed outside.

In the right coupling 53R, action instructing switches 58A, 58B for instructing actions different from the action instructing switches 56R, 56L are formed, and the left coupling 53L forms a start switch 59A and a select switch 59B. The direction instructing switches 55R, 55L, the action instructing switches 56R, 56L, 58A, 58B, start switch 59A and select switch 59B are composed of, same as in the embodiment in Fig. 1, key tops 53r, 53l, 56r, 56l, 58a, 58b, 59a, 59b, rubber contacts (not shown) formed in the lower part of each key top, and the board (not shown) on which rubber contacts are placed and contact circuits are formed.

Moreover, as shown in Fig. 10̸, also in the embodiment in Fig. 8, a step d is formed between the grip 54 and the operating region for forming the direction instructing switch 55. Accordingly, when the player holds the controller 50̸, the thumb draws a spontaneous arc along the step d, and is free to move without being warped, applied with an excessive load, or kept always in a tense state, so that the fatigue is less if used for a long time.

In the foregoing embodiments of the invention, the move direction instructions in a three-dimensional game are mentioned, but in a game enough with two-dimensional direction instructions only not requiring three-dimensional direction instructions, the moving direction of the object character may be instructed in one cross key, and the direction of the elements accompanying the character may be instructed in the other cross key. For example, in a game using soldiers as characters, the soldier moving direction is instructed by one cross key, and the firearm direction may be instructed by the other cross key. Furthermore, in an object driven independently in the right and left driving wheels such as war tank, the left drive wheel may be manipulated by the direction instructing switch for left hand 15L (55L), and the right drive wheel may be manipulated by the direction instructing switch for right hand 15R (55R).

Although the present invention has been described and illustrated in detail, it is clearly understood that the same is by way of illustration and example only and is not to be taken by way of limitation, the scope of the present invention being limited only by the terms of the appended claims.

## Claims

1. A game controller (10,50) which is adapted to be used with a video game machine and comprises a first operating portion (15L, 55L) provided in a first operating region; a second operating portion (15R, 55R) provided in a second operating region; a first handle (14L, 54L) formed in a manner projecting in use from a lower portion of said first operating region toward the front of a player; and a second handle (14R, 54R) formed in a manner projecting in use from a lower portion of said second operating region toward the front of the player, wherein said first handle and said second handle are grippable by left and right hand palms of the player, said first operating portion and said second operating portion are arranged for operation by left and right hand thumbs, and at least one of said first and second operating portions is arranged for designating a direction in movement of an object of a game by player's operation characterized in that the controller further comprises a housing (11,51) on which said first operating region and said second operating region are integrally provided laterally adjacent to each other in the same plane and that said first operating region and said second operating region are formed to be lowered in relation to portions at which the thumb roots are positioned on said first handle and said second handle.

2. A game controller according to claim 1 characterized in that said first handle and said second handle have respective front surfaces each inclined relative to an associated one of said first and second operating regions.

3. A game controller according to claim 2 characterized in that the respective front surfaces of said first and second handles are formed in an arcuate form.

4. A game controller according to any one of claims 1 to 3 characterized in that said first operating portion and said second operating portion respectively comprise switches for designating a direction in movement of the object.

5. A game controller according to claim 4 characterized in that said first operating portion comprises a switch for designating a direction in movement of the object in four orthogonal directions, and said second operating portion comprises a switch for designating a direction different from that of said first operating portion.

6. A game controller according to claim 5 characterised in that said first operating region and said second operating region of said housing respectively have recesses for exposing cross-shaped key tops of the first operating portion and the second operating portion respectively.

7. A game controller according to any one of claims 1 to 6 characterized by further comprising a third operating region provided between said first operating region and said second operating region in said housing, and said third operating region being provided with a start switch (19A,59A) for designating the start of the game.

8. A game controller according to claim 7 characterized in that said first operating portion and said second operating portion, as said housing is viewed in plan, have respective centres placed at the same vertical locations, and said start switch provided in said third operating region, as said housing is viewed in plan, being placed at a location vertically lower than said first operating portion or said second operating portion.

9. A game controller according to any one of claims 1 to 6 characterized in that the controller further comprises a third operating portion (16R,56R) and a fourth operating portion (16L,56L) respectively provided in said housing at locations within reach in use of left and right hand index fingers on a surface different from the surfaces of said first operating region and said second operating region, in a state in which the player is holding said housing by left and right hands.

10. A game controller according to any one of claims 1 to 9 characterized in that said housing is arranged such that, when said housing is placed on an arbitrary plane, said first operating region and said second operating region are almost parallel with the plane in which said housing is placed.

11. A game controller according to claim 10 characterised in that said third operating portion and said fourth operating portion are for designating operation other than the direction of movement of the object.

## Patentansprüche

1. Spiel-Steuerung (10, 50), die zum Gebrauch mit einem Video-Spielgerät eingerichtet ist und ein erstes Bedienteil (15L, 55L) aufweist, das in einem ersten Bedienbereich vorgesehen ist; ein zweites Bedienteil (15R, 55R), das in einem zweiten Bedienbereich vorgesehen ist; einen ersten Griff (14L, 54L), der derart ausgebildet ist, dass er sich bei Gebrauch von einem unteren Abschnitt des ersten Bedienbereiches in der Richtung der Spielervorderseite erstreckt; und einen zweiten Griff (14R, 54R), der derart ausgebildet ist, dass er sich bei Gebrauch von einem unteren Abschnitt des zweiten Bedienbereiches in Richtung der Spielervorderseite erstreckt, wobei der erste Griff und der zweite Griff durch die linke und rechte Handfläche des Spielers greifbar sind, das erste Bedienteil und das zweite Bedienteil zur Bedienung durch die Daumen der linken und rechten Hand eingerichtet sind, und mindestens eines von den ersten oder zweiten Bedienteilen zur Bestimmung einer Bewegungsrichtung eines Spiel-Objektes durch eine Spieleraktion eingerichtet ist,
dadurch gekennzeichnet, dass die Steuerung überdies ein Gehäuse (11, 51) aufweist, auf dem der erste Bedienbereich und der zweite Bedienbereich, sich in derselben Ebene seitlich zueinander angrenzend, einstückig vorgesehen sind, und dass der erste Bedienbereich und der zweite Bedienbereich relativ zu Abschnitten herabgesetzt sind, an denen die Daumenwurzeln auf dem ersten Griff und dem zweiten Griff angeordnet sind.

2. Spiel-Steuerung nach Anspruch 1,
dadurch gekennzeichnet, dass der erste Griff und der zweite Griff jeweilige Frontflächen besitzen, die jeweils relativ zu einem der zugeordneten ersten und zweiten Bedienbereich geneigt sind.

3. Spiel-Steuerung nach Anspruch 2,
dadurch gekennzeichnet, dass die jeweiligen Frontflächen des ersten und zweiten Griffs bogenförmig ausgebildet sind.

4. Spiel-Steuerung nach einem der Ansprüche 1 bis 3,
dadurch gekennzeichnet, dass das erste Bedienteil und das zweite Bedienteil jeweils Schalter aufweisen, um eine Bewegungsrichtung des Objekts zu bestimmen.

5. Spiel-Steuerung nach Anspruch 4,
dadurch gekennzeichnet, dass das erste Bedienteil einen Schalter aufweist, um eine Bewegungsrichtung des Objekts in vier orthogonale Richtungen zu bestimmen, und das zweite Bedienteil einen Schalter aufweist, um eine von der des ersten Bedienteils unterschiedliche Richtung zu bestimmen.

6. Spiel-Steuerung nach Anspruch 5,
dadurch gekennzeichnet, dass der erste Bedienbereich und der zweite Bedienbereich des Gehäuses jeweils Aussparungen besitzen, um jeweils kreuzförmige Tastenaufsätze des ersten Bedienteils und des zweiten Bedienteils freizulegen.

7. Spiel-Steuerung nach einem der Ansprüche 1 bis 6,
dadurch gekennzeichnet, dass sie des Weiteren einen dritten Bedienbereich aufweist, der zwischen dem ersten Bedienbereich und dem zweiten Bedienbereich in dem Gehäuse vorgesehen ist, und der dritte Bedienbereich mit einem Start-Schalter (19A, 59A) zur Bestimmung des Spielstarts versehen ist.

8. Spiel-Steuerung nach Anspruch 7,
dadurch gekennzeichnet, dass das erste Bedienteil und das zweite Bedienteil bei einer Betrachtung des Gehäuses in der Ebene jeweilige Zentren besitzen, die an denselben vertikalen Stellen angeordnet sind, und der in dem dritten Bedienbereich vorgesehene Start-Schalter bei einer Betrachtung des Gehäuses in der Ebene an einer Stelle angeordnet ist, die vertikal tiefer liegt als das erste Bedienteil oder das zweite Bedienteil.

9. Spiel-Steuerung nach einem der Ansprüche 1 bis 6,
dadurch gekennzeichnet, dass die Steuerung überdies ein drittes Bedienteil (16R, 56R) und ein viertes Bedienteil (16L, 56L) aufweist, die jeweils in dem Gehäuse an Stellen auf einer Oberfläche bei Gebrauch innerhalb der Reichweite des linken und rechten Zeigefingers vorgesehen sind, die sich von den Oberflächen des ersten Bedienbereiches und des zweiten Bedienbereiches unterscheidet, in einem Zustand, in dem der Spieler das Gehäuse mit der linken und rechten Hand hält.

10. Spiel-Steuerung nach einem der Ansprüche 1 bis 9,
dadurch gekennzeichnet, dass das Gehäuse derart angeordnet ist, dass, wenn das Gehäuse auf einer beliebigen Ebene angeordnet ist, der erste Bedienbereich und der zweite Bedienbereich mit der Ebene fast parallel sind, in der das Gehäuse angeordnet ist.

11. Spiel-Steuerung nach Anspruch 10,
dadurch gekennzeichnet, dass das dritte Bedienteil und das vierte Bedienteil für eine andere Funktion als zur Richtungsbestimmung der Bewegung des Objekts bestimmt sind.

## Revendications

1. Commande de jeu (10,50) destinée à être utilisée avec une machine de jeu vidéo et qui comprend une première partie d'actionnement (15L, 55L) prévue dans une première région d'actionnement; une seconde partie d'actionnement (15R, 55R) prévue dans une seconde région d'actionnement; un premier manche (14L, 54L) formé de façon à faire saillie lorsqu'il est utilisé depuis une première partie inférieure de ladite première région d'actionnement en direction de la face d'un joueur; et un second manche (14R, 54R) formé de façon à faire saillie lorsqu'il est utilisé depuis une première partie de ladite seconde région d'actionnement en direction de la face du joueur, où ledit premier manche et ledit second manche peuvent être saisis par les paumes gauche et droite du joueur, ladite première partie d'actionnement et ladite seconde partie d'actionnement sont disposées de façon à être actionnées par les pouces gauche et droit de la main, et au moins l'une desdites première et seconde parties est disposée de façon à indiquer une direction de mouvement d'un objet d'un jeu sous l'effet de l'action du joueur, caractérisée en ce que ladite commande comprend en outre un boîtier (11,51) sur lequel ladite première région d'actionnement et ladite seconde région d'actionnement sont formées intégralement latéralement adjacentes l'une à l'autre dans le même plan et en ce que ladite première région d'actionnement et ladite seconde région d'actionnement sont formées de façon à être abaissées par rapport aux parties sur lesquelles sont positionnées les racines du pouce sur le premier manche et sur le second manche.

2. Commande de jeu selon la revendication 1, caractérisée en ce que ledit premier manche et ledit second manche comportent des surfaces frontales respectives qui sont chacune inclinées par rapport à l'une associée desdites première et seconde régions d'actionnement.

3. Commande de jeu selon la revendication 2, caractérisée en ce que les surfaces frontales respectives dudit premier et second manches sont formées suivant une forme courbe.

4. Commande de jeu selon l'une quelconque des revendications 1 à 3, caractérisée en ce que ladite première partie d'actionnement et ladite seconde partie d'actionnement comprennent chacune des commutateurs pour indiquer une direction de mouvement de l'objet.

5. Commande de jeu selon la revendication 4, caractérisée en ce que ladite première partie d'actionnement comprend un commutateur pour indiquer une direction de mouvement de l'objet dans quatre directions orthogonales, et ladite seconde partie d'actionnement comprend un commutateur pour indiquer une direction différente de celle de ladite première partie d'actionnement.

6. Commande de jeu selon la revendication 5, caractérisée en ce que ladite première région d'actionnement et ladite seconde région d'actionnement dudit boîtier comprennent respectivement des cavités pour présenter des sommets de touche en forme de croix de la première partie d'actionnement et de la seconde partie d'actionnement respectivement.

7. Commande de jeu selon l'une quelconque des revendications 1 à 6, caractérisée en ce qu'elle comprend en outre une troisième région d'actionnement prévue entre ladite première région d'actionnement et ladite seconde région d'actionnement dans ledit boîtier, et ladite troisième région d'actionnement comporte un commutateur de mise en route (19A, 59A) pour indiquer le début du jeu.

8. Commande de jeu selon la revendication 7, caractérisée en ce que ladite première partie d'actionnement et ladite seconde partie d'actionnement, ledit boîtier étant vu en plan, présentent respectivement des centres ayant le même emplacement vertical, et ledit commutateur de mise en route prévu dans ladite troisième région d'actionnement, ledit boîtier étant vu en plan, est placé en un emplacement verticalement inférieur à ladite première partie d'actionnement ou à ladite seconde partie d'actionnement.

9. Commande de jeu selon l'une quelconque des revendications 1 à 6, caractérisée en ce que la commande comprend en outre une troisième partie d'actionnement (16R, 56R) et une quatrième partie d'actionnement (16L, 56L) respectivement prévues dans ledit boîtier en des emplacements à la portée en utilisation des index des mains gauche et droite sur une surface différente des surfaces de ladite première région d'actionnement et de ladite seconde région d'actionnement, dans un état dans lequel le joueur tient ledit boîtier au moyen des mains gauche et droite.

10. Commande de jeu selon l'une quelconque des revendications 1 à 9, caractérisée en ce que ledit boîtier est disposé de telle façon que, lorsque ledit boîtier est placé sur un plan arbitraire, ladite première région d'actionnement et ladite seconde région d'actionnement sont presque parallèles au plan dans lequel est placé ledit boîtier.

11. Commande de jeu selon la revendication 10, caractérisée en ce que ladite troisième partie d'actionnement et ladite quatrième partie d'actionnement sont prévues pour un actionnement autre que celui de la direction du mouvement de l'objet.
